(19) Europäisches Patentamt
European Patent Office
Office européen des brevets

(11) EP 0 809 209 A2

## (12) EUROPEAN PATENT APPLICATION

(43) Date of publication:
26.11.1997 Bulletin 1997/48

(51) Int Cl.6: G06T 5/40

(21) Application number: 97303287.3

(22) Date of filing: 14.05.1997

(84) Designated Contracting States:
DE ES GB

(30) Priority: 21.05.1996 KR 9617209

(71) Applicant: Samsung Electronics Co., Ltd.
Suwon City, Kyungki-do (KR)

(72) Inventor: Kim, Yeong-taeg
Paldal-gu, Suwon-city, Kyungki-do (KR)

(74) Representative: Chugg, David John
Appleyard Lees,
15 Clare Road
Halifax, West Yorkshire HX1 2HY (GB)

(54) **Image enhancing method using lowpass filtering and histogram equalization and a device therefor**

(57)     In an image enhancing method, an input image signal is lowpass filtered and then histogram equalized to become a contrast-enhanced signal. Then, the lowpass filtered signal is subtracted from the input image signal. Afterwards, the subtracted value is added to the contrast enhanced signal, and the added result is output as an image enhanced output signal. Thus, the contrast of a given image signal is improved without an increase in background noise.

FIG. 2

## Description

The present invention relates to an image enhancing method, a device therefor, and more particularly, to an image enhancing method which aims to enhance the contrast of an image without an increase in noise and a device suitable for the method.

A histogram of a gray level provides an overall description of the appearance of an image. Properly adjusted gray levels for a given image can enhance the appearance or contrast of the image.

Among many methods for contrast enhancement, the most widely known one is the histogram equalization, in which the contrast of a given image is enhanced according to the sample distribution thereof. The method is disclosed in documents: [1] J.S. Lim, "Two-dimensional Signal and Image Processing," Prentice Hall, Englewood Cliffs, New Jersey, 1990, and [2] R.C. Gonzalez and P. Wints, "Digital Image Processing," Addison-Wesley, Reading, Massachusetts. 1977.

Also, useful applications of the histogram equalization method for medical image processing and radar image processing are disclosed in documents: [3] J. Zimmerman, S. Pizer, E. Staab, E. Perry, W. McCarteney and B. Brenton, "Evaluation of the Effectiveness of Adaptive Histogram Equalization for Contrast Enhancement," IEEE Tr. on Medical Imaging, pp. 304-312, Dec. 1988, and [4] Y. Li, W. Wang and D.Y. Yu, "Application of Adaptive Histogram Equalization to X-ray Chest Image," Proc. of the SPIE, pp. 513-514, vol. 2321, 1994.

In general, since histogram equalization causes the dynamic range of an image to be stretched, the density distribution of the resultant image is made flat so that the contrast of the image is enhanced as a consequence thereof.

However, such a widely-known feature of the histogram equalization method causes problems in some practical cases. That is, since the contrast is enhanced by stretching the dynamic range, background noise is increased simultaneously by the equalization. Thus, the equalization may cause the degradation of image quality in a region having a constant level.

With a view to solve or reduce the above problem, one aim of embodiments of the present invention is to provide an image enhancing method for enhancing the contrast of an image including Gaussian noise while preventing an increase in noise simultaneously by lowpass filtering the input image and histogram-equalizing the lowpass filtered signal.

Another aim of embodiments of the present invention is to provide an image enhancing device for enhancing the contrast of an image including Gaussian noise while preventing an increase in noise simultaneously by lowpass filtering the input image and histogram-equalizing the lowpass filtered signal.

According to an aspect of the invention, there is provided an image enhancing method by histogram-equalizing an image signal represented by a predetermined number of gray levels, comprising the steps of (a) lowpass filtering an input image signal to output a lowpass filtered signal; (b) histogram equalizing the lowpass filtered signal to output a contrast-enhanced signal; (c) subtracting the lowpass filtered signal from the input image signal; and (d) outputting a signal produced by adding the subtracted value in the step (c) to the contrast enhanced signal.

Preferably, said step (b) comprises the steps of: calculating a probability density function which represents a gray level distribution in the lowpass filtered signal by a picture unit; calculating a cumulative density function on the basis of the probability density function; and mapping the lowpass filtered signal into a gray level according to the cumulative density function.

The difference between the output signal and the contrast enhanced signal is preferably the same as that between the input image signal and the lowpass filtered signal.

According to a second aspect of the invention, there is provided an image enhancing device by histogram equalizing an image signal represented by a predetermined number of gray levels, comprising lowpass filtering means for lowpass filtering an input image signal and outputting the lowpass filtered signal; histogram equalizing means for histogram equalizing the lowpass filtered signal and outputting a contrast enhanced signal; detecting means for detecting the difference between the input signal and the lowpass filtered signal; and outputting means for adding the detected difference value to the contrast enhanced signal to output the added result as an output signal.

Said histogram equalizing means preferably comprises: first calculating means for receiving the lowpass filtered signal and calculating a probability density function which represents a gray level distribution in the lowpass filtered signal by a picture unit; second calculating means for calculating a cumulative density function on the basis of the probability distribution function; and mapping means for mapping the lowpass filtered signal into a gray level according to the cumulative density function value.

The device may further comprise a picture memory for delaying the lowpass filtered signal by one frame to output a signal in the same frame as the cumulative density function value output by said second calculating means.

For a better understanding of the invention, and to show how embodiments of the same may be carried into effect, reference will now be made, by way of example, to the accompanying diagrammatic drawings, in which:

Figure 1 is a block diagram of an image enhancing device using lowpass filtering and histogram equalization according to an embodiment of the present invention; and

Figure 2 is a detailed block diagram of the image enhancing device of Figure 1 according to an embodiment of the present invention.

First, an image quality improving method according to aspects of the present invention will be described.

Assume that $\{Y(i,j)\}$ denotes an input image composed of L gray levels $\{X_0, X_1, ..., X_{L-1}\}$, and $\{A(i,j)\}$ denotes a lowpass filtered image signal of the input image $\{Y(i,j)\}$.

Also, assume that $A_{eq}(i,j)$ denotes a lowpass filtered image signal (hereinafter, referred to as "an improved signal") whose contrast is improved compared with input image $\{Y(i,j)\}$ using the histogram equalization, and $Y_H(i,j)$ denotes a final output signal.

Here, the contrast improving method using the histogram equalization involves a typical histogram equalization technique wherein a cumulative density function (CDF) of a given image sample is used in a conversion function. However, embodiments of the present invention can also be employed in applications using a modified histogram equalization other than the typical histogram equalization method.

The final output signal $Y_H(i,j)$ is obtained by subtracting the lowpass filtered signal $A(i,j)$ from the input signal $Y(i,j)$ and adding the result to the improved signal $A_{eq}(i,j)$, which is expressed in the following equation (1).

$$Y_H(i,j) = A_{eq}(i,j) + (Y(i,j) - A(i,j)) \qquad (1)$$

Here, $Y(i,j)-A(i,j)$ corresponds to the high frequency component of the original input image signal.

The basic concept and utility of embodiments of the present invention will be easily understood in view of the following equation which is formed by changing equation (1).

$$Y_H(i,j)-A_{eq}(i,j)=Y(i,j)-A(i,j) \qquad (2)$$

The above equation (2) implies that the difference between the final output signal $Y_H(i,j)$ and the improved signal $A_{eq}(i,j)$ is equal to that between the input signal $Y(i,j)$ and the lowpass filtered signal.

That is, the difference between two different input samples which result in the same lowpass filtered value is the same as that between the output signals corresponding to the input samples.

In other words, when two adjacent samples in an image region having a constant signal level have different values due to Gaussian noise, the difference between the two samples remains the same at the output ends of the present invention in the case that the lowpass filtered values of the two samples are equal to each other. Thus, embodiments of the present invention prevent an increase in noise when the contrast of the image is improved by the histogram equalization.

It is well known that if an image signal having a constant signal level includes Gaussian noise, the constant signal level can be extracted by lowpass filtering the image signal.

To give a further detailed description, assume that the input samples $Y(i,j)$ and $Y(l',j')$ results in the same lowpass filtered value. That is, $A(i,j)$ is equal to $A(l',j')$, which makes $A_{eq}(i,j)$ equal to $A_{eq}(l',j')$.

Then, the output signals corresponding to $Y(i,j)$ and $Y(l',j')$ are given as follows, respectively.

$$Y_H(i,j) = A_{eq}(i,j) + (Y(i,j) - A(i,j)) \qquad (3)$$

$$Y_H(l',j') = A_{eq}(l',j') + (Y(l',j') - A(l',j')) \qquad (4)$$

Using the relationships that $A(i,j)$ equals $A(l',j')$ and $A_{eq}(i,j)$ equals $A_{eq}(l',j')$, the following equation can be obtained.

$$Y_H(i,j) - Y_H(l',j') = Y(l',j') - Y(l',j') \qquad (5)$$

Equation (5) indicates that the difference between the two input samples is the same as that between corresponding output signals. Thus, an increase in noise is prevented during the enhancement of contrast using the histogram equalization.

Next, a typical histogram equalization algorithm will be described to facilitate an understanding of the concept of the present invention.

It is assumed that the given input image $\{A(i,j)\}$ is composed of L discrete gray levels $(X_0, X_1, ... X_{L-1})$, where $X_0=0$ represents a black level, and $X_0=1$ represents a white level. A probability density function (PDF) for $\{A(i,j)\}$ is defined as follows.

$$p(X_k) = \frac{n_k}{n} \qquad (6)$$

Here, $p(X_k)$ represents the probability that the K-th gray level $X_k$ appears in the input image $\{A(i,j)\}$, $n_k$ denotes the number of occurrences of the gray level $X_k$ in the input image $\{A(i,j)\}$, and n denotes the total number of samples in $\{(A(i,j)\}$.

Also, a cumulative density function (CDF) is defined as follows.

$$c(X_k) = \sum_{j=0}^{k} p(X_j) \qquad ...(7)$$

On the basis of the cumulative density function, the output $A_{eq}(i,j)$ of the typical histogram equalization with respect to the given input signal A(i,j) is given by following equation.

$$A_{eq}(i,j) = c(A(i,j) XL-1 \qquad (8)$$

where, $A(i,j) \in \{X_0,X_1,...X_{L-1}\}$.

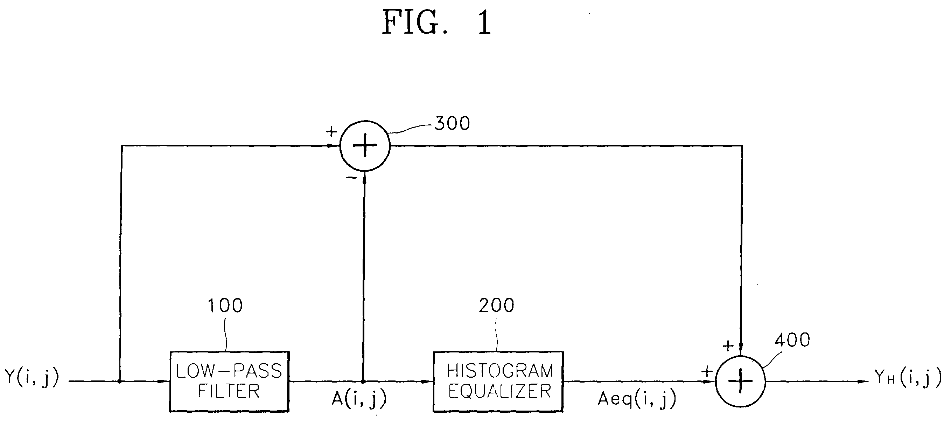

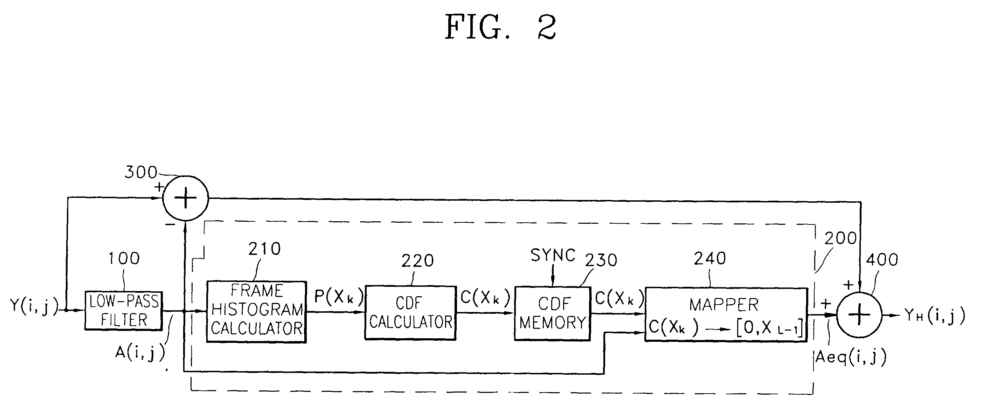

Now, a preferred embodiment of the image enhancing device using lowpass filtering and histogram equalization according to the present invention will be explained with reference to Figures 1 and 2.

Referring to Figure 1, a lowpass filter 100 receives an input signal Y(i,j) and carries out lowpass filtering of such signal to output a lowpass filtered signal A(i,j).

A histogram equalizer 200 equalizes the lowpass filtered signal A(i,j) output by the lowpass filter 100, thereby enhancing image contrast of the lowpass filtered signal.

A subtractor 300 subtracts the lowpass filtered signal A(i,j) output by the lowpass filter 100 from the input signal Y(i,j). An adder 400 adds an improved signal $A_{eq}$(i,j) output by the histogram equalizer 200 to the output of the subtractor 300 and outputs a final output signal $Y_H$(i,j) which is expressed by the equation (1).

Figure 2 is a detailed block diagram of the device shown in Figure 1, in which a typical histogram equalization method is employed. In Figure 2, the same reference numerals were designated to the components similar to those shown in Figure 1, and the description will be focused on the histogram equalizer 200.

The histogram equalizer 200 includes a frame histogram calculator 210, a CDF calculator 220, a CDF memory 230 and a mapper 240.

The frame histogram calculator 210 receives the lowpass filtered signal A(i,j) (which can be denoted by $X_k$, also) output by the lowpass filter 100 in a picture unit, and calculates the probable density function $P(X_k)$ which represents a gray level distribution in the lowpass filtered signal $X_k$ according to the equation (6) by a unit of a picture. In the present embodiment, one frame is used for the picture unit. However, one field may be used for the picture unit, alternatively.

A CDF calculator 220 receives the probability density function $p(X_k)$ output by the frame histogram calculator 210 and calculates a cumulative density function c $(X_k)$ according to the equation (7).

A CDF memory 230 stores the cumulative density function $c(X_k)$ calculated by the CDF calculator 220 by a unit of one frame, updates the stored value in response to a synchronization signal SYNC, and outputs a cumulative density function value $c(X_k)$ corresponding to an input sample $X_k$ stored one frame before. Here, a field sync signal is used for the synchronization signal SYNC when the picture unit is one field while a frame sync signal is used for the synchronization signal SYNC when the picture unit is one frame. The CDF memory 230 is also used as a buffer.

The mapper 240 reads out the cumulative density function value $c(X_k)$, which corresponds to the lowpass filtered signal $X_k$ output by the lowpass filter 100 but is delayed by one frame, from the CDF memory 230 and maps the lowpass filtered signal $X_k$ into a gray level of $X_0$ to $X_m$ according to the equation (8).

A frame memory can be further included in the histogram equalizer 200 for delaying the lowpass filtered signal $X_k$, output by the lowpass filter 100 by one frame, so that a signal in the same frame as the cumulative density function value output by the CDF calculator 220 is input to the mapper 240.

The method of embodiments of the present invention can be applied in many fields associated with the improvement of image signal quality, such as broadcasting equipments, radar signal processing, medical engineering, and consumer electronics.

As described above, by lowpass filtering an input signal and histogram equalizing the lowpass filtered signal, image contrast may be improved while preventing an increase in noise.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image enhancing method by histogram-equalizing an image signal represented by a predetermined number of gray levels, comprising the steps of:

   (a) lowpass filtering an input image signal to output a lowpass filtered signal;

(b) histogram equalizing the lowpass filtered signal to output a contrast-enhanced signal;

(c) subtracting the lowpass filtered signal from the input image signal; and

(d) outputting a signal produced by adding the subtracted value in said step (c) to the contrast enhanced signal.

2. An image enhancing method as claimed in claim 1, wherein said step (b) comprises the steps of:

calculating a probability density function which represents a gray level distribution in the lowpass filtered signal by a picture unit;

calculating a cumulative density function on the basis of the probability density function; and

mapping the lowpass filtered signal into a gray level according to the cumulative density function.

3. An image enhancing method as claimed in claim 1 or 2, wherein the difference between the output signal and the contrast enhanced signal is the same as that between the input image signal and the lowpass filtered signal.

4. An image enhancing device by histogram equalizing an image signal represented by a predetermined number of gray levels, comprising:

lowpass filtering means (100) for lowpass filtering an input image signal and outputting the lowpass filtered signal;

histogram equalizing means (200) for histogram equalizing the lowpass filtered signal and outputting a contrast enhanced signal;

detecting means (300) for detecting the difference between the input signal and the lowpass filtered signal; and

outputting means (400) for adding the detected difference value to the contrast enhanced signal to output the added result as an output signal.

5. An image enhancing device as claimed in claim 4, wherein said histogram equalizing means (200) comprises:

first calculating means (210) for receiving the lowpass filtered signal and calculating a probability density function which represents a gray level distribution in the lowpass filtered signal by a picture unit;

second calculating means (220) for calculating a cumulative density function on the basis of the probability distribution function; and

mapping means (240) for mapping the lowpass filtered signal into a gray level according to the cumulative density function value.

6. An image enhancing device as claimed in claim 5, further comprising a picture memory (230) for delaying the lowpass filtered signal by one frame to output a signal in the same frame as the cumulative density function value output by said second calculating means.

7. An image enhancing device as claimed in claim 5, further comprising a buffer (230) for storing the cumulative density function values calculated by said second calculating means by a picture unit, updating the stored values in response to a synchronization signal, and outputting a cumulative density function value stored one frame before to said mapping means.

# FIG. 1

EP 0 809 209 A2

# FIG. 2